# FASCICULE DE BREVET EUROPEEN

(11) **EP 1 088 743 B1**
(45) Date de publication et mention de la délivrance du brevet: **18.06.2003**
(21) Numéro de dépôt: 00402672.0
(22) Date de dépôt: 27.09.2000
(51) Int. Cl.: B62D 13/04

(54) **Remorque à roues orientables**
Anhänger mit lenkbaren Rädern
Trailer with steerable wheels

(30) Priorité: 28.09.1999 FR 9912060
(43) Date de publication de la demande: 04.04.2001
(73) Titulaire: EXEL INDUSTRIES, 51200 Epernay (FR)
(72) Inventeur: Ballu, Patrick, 51100 Reims (FR)
(74) Mandataire: Colas, Jean-Pierre

(56) Documents cités:
- EP-A- 0 653 343
- DE-A- 19 707 934
- PATENT ABSTRACTS OF JAPAN vol. 018, no. 128 (C-1174), 2 mars 1994 (1994-03-02) -& JP 05 316807 A (SEIBUTSUKEI TOKUTEI SANGYO GIJUTSU KENKYU SUISHIN KIKO), 3 décembre 1993 (1993-12-03)

## Description

La présente invention est relative à une remorque destinée à être accouplée à un engin tracteur, telle qu'une remorque de pulvérisation agricole.

Lorsqu'une remorque est accouplée à un engin tracteur et que cet engin change de direction, la remorque a naturellement tendance à couper le chemin emprunté par l'engin, élargissant ainsi la bande de passage des roues de la remorque et de l'engin.

Lorsque la remorque est un appareil agricole tel qu'un pulvérisateur circulant dans un champ de végétaux cultivés, cet inconvénient conduit à un écrasement massif de ces végétaux dans les zones où l'engin tracteur change de direction, notamment en bout de champ où cet engin doit effectuer des demi-tours, entraînant une perte de production et de rendement.

On connaît de la technique antérieure (voir EP 0653343 qui sert de base à la présentation en deux parties de la revendication 1) une remorque destinée a être accouplée à un engin tracteur, telle qu'une remorque de pulvérisation agricole, comprenant:
- un châssis supporté par au moins deux roues orientables,
- des moyens pour orienter lesdites roues dans un sens opposé à celui du braquage dudit engin tracteur, et
- des moyens pour commander lesdits moyens d'orientation.

On a représenté de manière schématique sur les figures 1 à 9 du dessin annexé les positions successives d'une telle remorque R attelée à un engin tracteur T qui effectue un virage de 90° vers la droite, puis vers la gauche.

Sur la figure 1, la remorque R et l'engin tracteur T sont situés dans la ligne droite qui précède le virage. Les roues orientables 1, 2 de la remorque R sont dans l'axe de cette remorque, et les roues directrices 3, 4 de l'engin T sont alignées avec les roues tractrices 5, 6 de cet engin.

Sur la figure 2, l'engin tracteur T amorce le virage vers la droite. Ses roues directrices 3, 4 sont orientées vers la droite, et les roues 1, 2 de la remorque R sont orientées vers la gauche.

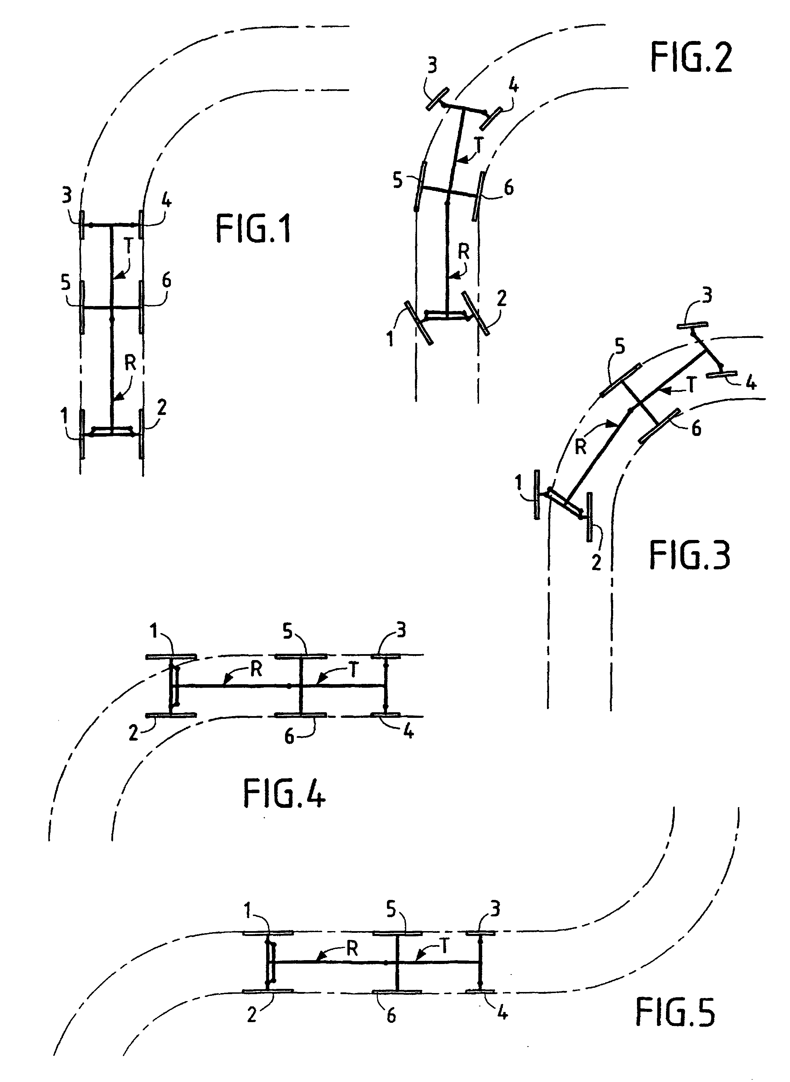

Comme on le voit sur la figure 3, cette orientation des roues de la remorque R a pour effet de maintenir celle-ci à l'extérieur du virage, permettant d'éviter qu'elle ne coupe le chemin emprunté par l'engin T.

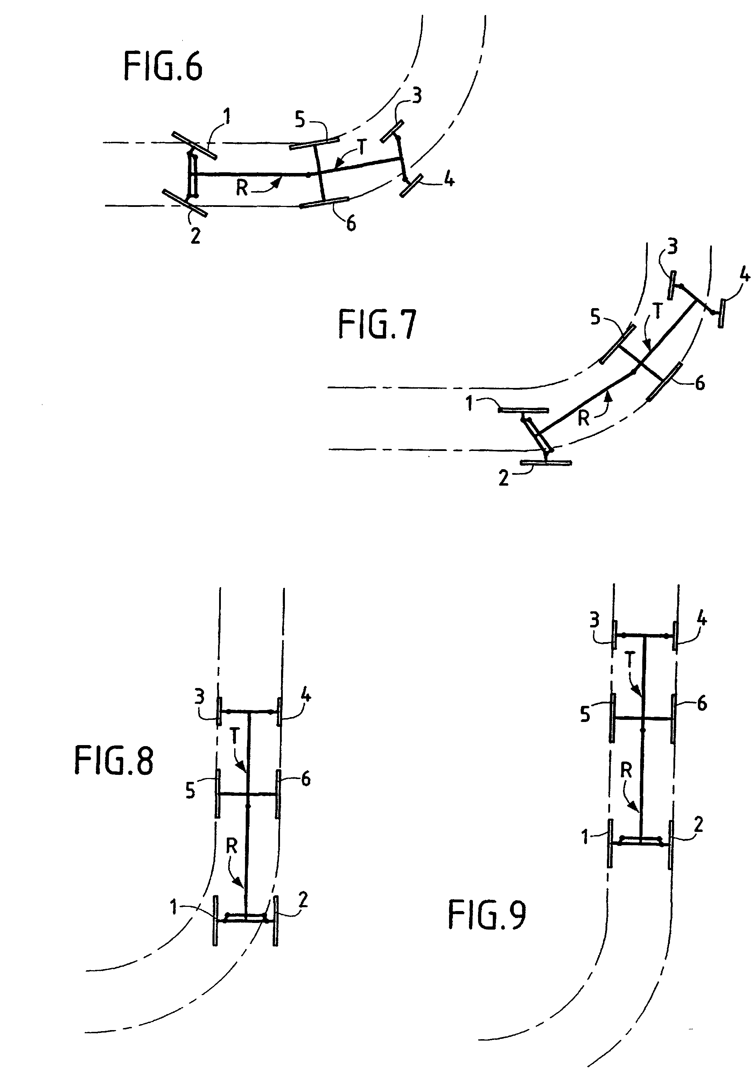

Sur la figure 4, on voit que la remorque R rejoint progressivement le chemin emprunté par l'engin T lorsque celui-ci est sorti du virage, pour enfin se retrouver, figure 5, dans une situation analogue à celle de la figure 1.

Les figures 6, 7, 8, 9 sont analogues respectivement aux figures 2, 3, 4, 5, pour un virage à gauche.

A l'examen de ces figures, on s'aperçoit que la remorque R s'écarte quelque peu, dans le virage, du chemin emprunté par l'engin T, de sorte que la largeur de la bande de passage des roues de la remorque et de l'engin reste encore assez importante.

La présente invention a pour but de fournir une remorque à roues orientables qui suive avec encore plus de précision le chemin emprunté par l'engin tracteur.

On atteint ce but de l'invention avec une remorque destinée à être accouplée à un engin tracteur, telle qu'une remorque de pulvérisation agricole, comprenant:
- un châssis supporté par au moins deux roues orientables,
- des moyens pour orienter lesdites roues dans un sens opposé à celui du braquage dudit engin tracteur,
- des moyens pour commander lesdits moyens d'orientation,
remarquable en ce qu'elle comprend des moyens pour interdire l'actionnement desdits moyens d'orientation pendant une période de temps prédéterminée débutant au moment où ledit engin tracteur commence à pivoter par rapport à ladite remorque, et pour autoriser ledit actionnement à la fin de ladite période.

Grâce à ces caractéristiques, à l'entrée d'un virage, la remorque continue d'avancer sensiblement dans la même direction pendant une certaine durée alors même que l'engin tracteur a déjà changé de direction, évitant ainsi que cette remorque ne soit déportée à l'extérieur du virage emprunté par l'engin tracteur.

Suivant d'autres caractéristiques de l'invention:
- lesdits moyens d'interdiction et d'autorisation comprennent des moyens pour mesurer la distance parcourue par lesdites roues orientables à partir dudit moment et pour n'autoriser ledit actionnement que lorsque ladite distance a atteint une valeur prédéterminée,
- ladite valeur prédéterminée est sensiblement égale à la longueur séparant l'axe desdites roues orientables de l'axe des roues tractrices dudit engin tracteur,

Grâce à ces caractéristiques, les roues de la remorque ne changent d'orientation que lorsque qu'elles atteignent le point où les roues directrices de l'engin tracteur ont commencé de changer d'orientation, permettant ainsi à la remorque de suivre au plus près le chemin emprunté par l'engin tracteur.

Suivant encore d'autres caractéristiques de l'invention:
- lesdits moyens de mesure comprennent des moyens pour compter le nombre de tours effectués par au moins l'une desdites roues orientables, ou un système GPS™, ou un radar,
- lesdits moyens d'interdiction et d'autorisation comprennent des moyens pour décompter la durée écoulée à compter dudit moment et pour n'autoriser ledit actionnement que lorsque ladite durée a atteint une valeur prédéterminée dépendant de la vitesse à laquelle circule ledit engin tracteur,
- ladite remorque comprend deux roues orientables montées sur des palonniers eux-mêmes montés pivotants sur un essieu solidaire dudit châssis, ces deux palonniers étant reliés entre eux par une barre articulée sur ceux-ci, lesdits moyens d'orientation des roues comprennent au moins un ensemble d'actionneur mécanique susceptible de faire pivoter au moins l'un desdits palonniers, et lesdits moyens de commande comprennent:
   - un coulisseau monté glissant sur ladite barre,
   - des moyens pour déplacer ledit coulisseau le long de ladite barre lorsque ledit engin tracteur pivote par rapport à ladite remorque,
   - des moyens pour détecter la position dudit coulisseau par rapport à ladite barre, et
   - un calculateur électronique relié électriquement audit ensemble d'actionneur mécanique, auxdits moyens de détection et auxdits moyens de mesure,
- lesdits moyens pour déplacer ledit coulisseau comprennent une came montée pivotante sur ledit châssis, cette came étant munie d'une rainure coopérant avec un pion situé sur ledit coulisseau, un câble fixé à cette came étant destiné à la relier audit engin tracteur de manière à la faire pivoter lorsque cet engin tracteur pivote rapport à ladite remorque,
- lesdits moyens de détection comprennent des capteurs de position tels que des micro-contacts disposés de manière à pouvoir être actionnés simultanément par ledit coulisseau lorsqu'il se trouve en position neutre sur ladite barre, et alternativement lorsque ce coulisseau glisse le long de cette barre vers la gauche ou vers la droite,
- ledit ensemble d'actionneur mécanique comprend un vérin à double effet à simple ou double tige connecté à un distributeur hydraulique, ou un mécanisme à crémaillère,
- ladite remorque comprend des moyens pour éviter que lesdites roues orientables ne se mettent à tourner lorsque ledit engin tracteur effectue des petits écarts involontaires de part et d'autre d'une trajectoire rectiligne,
- lesdits moyens pour éviter la rotation desdites roues comprennent un capteur de remise à zéro fixé sur ledit châssis, relié électriquement audit calculateur électronique, disposé de manière à pouvoir être actionné par un galet fixé par exemple sur ledit câble ou sur ladite came lorsque ladite remorque et ledit engin tracteur sont alignés.

D'autres caractéristiques et avantages de la présente invention apparaîtront à la lecture de la description qui va suivre et à l'examen du dessin annexé, dans lequel:
- les figures 1 à 9, auxquelles il a déjà été fait référence ci-dessus, sont des vues de dessus des positions successives d'une remorque de la technique antérieure attelée à un engin tracteur qui effectue un virage de 90° vers la droite, puis vers la gauche,

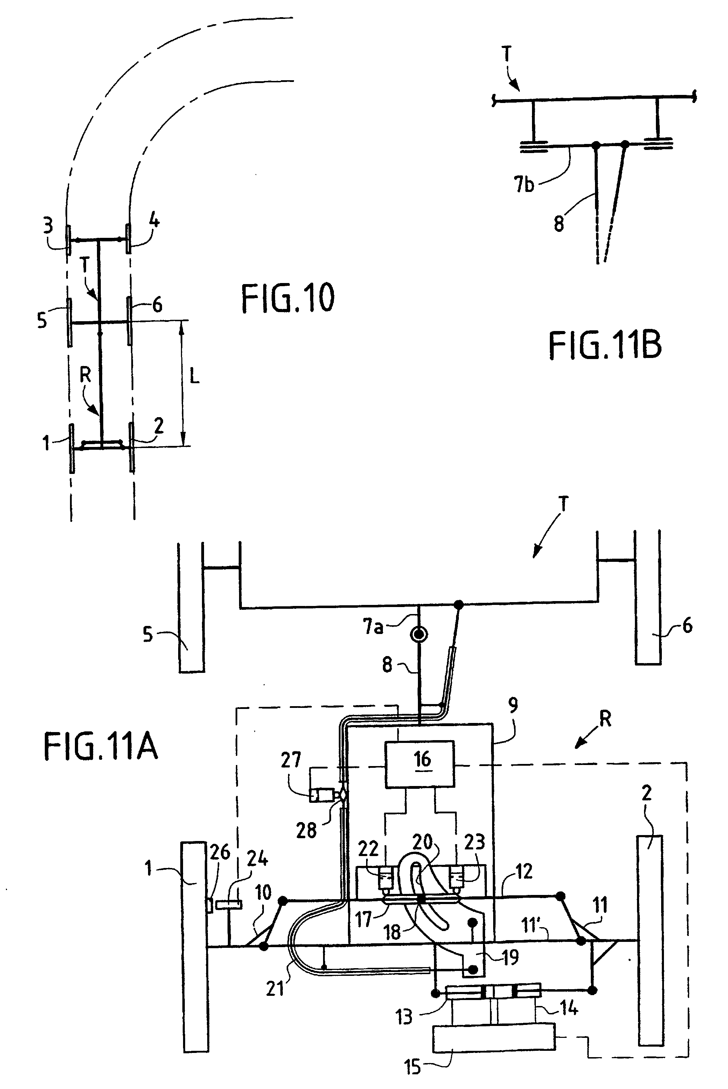

- les figures 10, 12, 14, 16, 18 sont des vues de dessus d'une remorque selon l'invention attelée à un engin tracteur, dans des positions analogues à celles des figures 1 à 5,
- les figures 11a, 13, 15, 17, 19 sont des vues de dessus détaillées de la remorque selon l'invention lorsqu'elle se trouve respectivement dans les positions des figures 10, 12, 14, 16, 18, et
- la figure 11b représente schématiquement une variante des moyens d'attelage de la remorque selon l'invention à un engin tracteur.

Sur ces figures, des références identiques désignent des organes ou ensembles d'organes identiques ou analogues.

On se reporte à présent à la figure 11a, sur laquelle on peut voir les principaux organes qui constituent la remorque R selon l'invention.

Sur cette figure, on a représenté cette remorque lorsqu'elle est attelée à un piton 7a solidaire du châssis d'un engin tracteur T, mais il est évident que tout autre type d'attelage peut être utilisé.

On a représenté par exemple sur la figure 11b une variante d'attelage dans laquelle la remorque R est attelée au bras de relevage 7b de l'engin tracteur T.

La remorque R, qui peut être par exemple une remorque de pulvérisation agricole, comprend une flèche d'attelage 8 reliée à un châssis en forme de cadre 9, ainsi qu'au moins deux roues 1, 2 montées sur des palonniers 10, 11 eux-mêmes montés pivotants sur un essieu 11' fixé sur le châssis 9.

Ces deux palonniers sont reliés entre eux par une barre 12 articulée sur ceux-ci.

Un actionneur mécanique tel qu'un vérin à double effet et à double tige 13 est fixé sur l'essieu 11' de manière à pouvoir actionner au moins l'un 11 des deux palonniers 10, 11, ce vérin étant relié par des conduites 14 à un distributeur hydraulique 15.

La remorque R comprend par ailleurs des moyens pour commander l'actionnement du vérin 13.

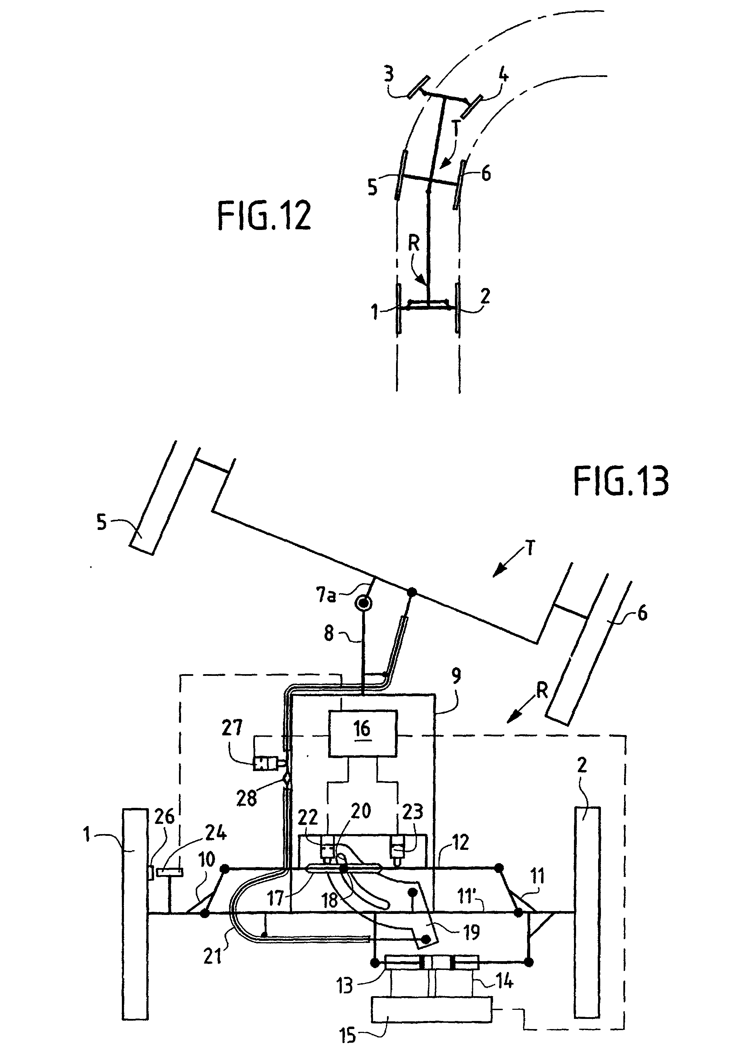

Ces moyens comprennent:
- un coulisseau 17 monté glissant sur la barre 12, muni dans sa partie médiane d'un pion 18,
- une came 19 montée pivotante sur l'essieu 11', cette came étant munie d'une rainure 20 coopérant avec le pion 18,
- un câble 21 reliant la came 19 à l'arrière de l'engin tracteur T, ce câble étant disposé de manière que, par exemple, lorsque l'engin tracteur T tourne vers la droite ou vers la gauche, il entraîne respectivement une rotation de celle-ci dans le sens des aiguilles d'une montre ou dans le sens contraire des aiguilles d'une montre, et
- des capteurs de position 22, 23 tels que des micro-contacts fixés à la barre 12, disposés de manière à pouvoir être actionnés simultanément par le coulisseau 17 lorsqu'il se trouve en position neutre telle que représentée sur la figure 7, et alternativement lorsque ce coulisseau glisse le long de la barre 12 vers la gauche (voir figure 13) ou vers la droite, et
- un calculateur électronique 16 relié électriquement distributeur hydraulique 15 et aux capteurs de position 22, 23.

Ce calculateur électronique peut comprendre un microprocesseur dûment programmé selon des principes à la portée de l'homme du métier pour exécuter les fonctions qui vont être décrites dans ce qui suit.

La remorque R comprend en outre des moyens pour interdire ou autoriser l'actionnement du vérin 13.

Ces moyens comprennent de préférence au moins un capteur de comptage 24 tel qu'un capteur à effet Hall fixé sur le palonnier 10 d'une roue 1 de la remorque, disposé de manière à pouvoir compter les passages d'un plot magnétique 26 fixé sur la roue 1, ce capteur étant relié électriquement au calculateur électronique 16.

La remorque selon l'invention comprend également de préférence un capteur de remise à zéro 27 fixé sur le châssis 9, disposé de manière à pouvoir être actionné par un galet 28 fixé par exemple sur le câble 21 ou sur la came 19 lorsque la remorque R est dans l'axe de l'engin tracteur T (voir figure 11a). Ce capteur de remise à zéro est également relié électriquement au calculateur électronique 16.

Le fonctionnement et les avantages de la remorque selon l'invention vont être explicités dans ce qui suit

Lorsque l'engin tracteur T suit une ligne droite, (voir figure 10), la remorque R se trouve dans l'axe de l'engin tracteur T (voir figures 10 et 11a).

Dans cette configuration, le câble 21 maintient la came 19 en position neutre, celle-ci maintenant à son tour, grâce à sa rainure 20 coopérant avec le pion 18, le coulisseau 17 en position neutre sur la barre 12 (voir figure 11a).

Ce coulisseau actionne de la sorte simultanément les deux capteurs de position 22, 23.

Tant que ces deux capteurs de position sont actionnés, le calculateur électronique 16 n'envoie aucune instruction de commande au distributeur hydraulique 15: le vérin 13 reste immobile et les roues 1, 2 de la remorque R restent orientées dans l'axe de cette remorque.

Lorsque l'engin tracteur T amorce un virage à droite (voir figure 12), le câble 21 entraîne la rotation de la came 19 dans le sens contraire des aiguilles d'une montre, celle-ci entraînant à son tour le coulisseau 17 vers la gauche de la figure (voir figure 13).

Ce coulisseau libère de la sorte le capteur de position 23 situé à droite de la figure, et continue d'actionner le capteur de position 22 situé à gauche de la figure.

A partir du moment où le capteur de position 23 est libéré, le calculateur électronique 16 comptabilise le nombre de tours effectués par la roue 1 d'après le signal envoyé par le capteur de comptage 24.

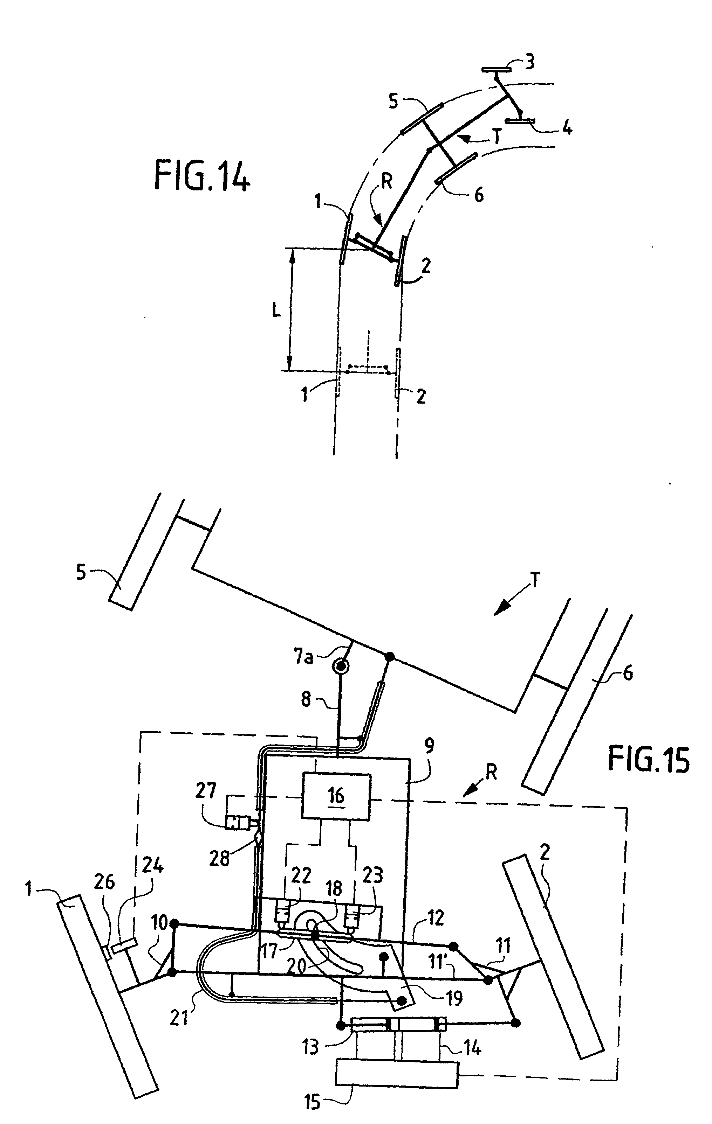

Quand ce nombre de tours atteint une valeur indiquant que la roue 1 a sensiblement atteint la position qu'occupait l'arrière de l'engin tracteur T lorsqu'il a amorcé le virage, c'est-à-dire en d'autres termes lorsque la roue 1 a parcouru une distance sensiblement égale à la longueur L (voir figure 10) séparant l'axe les roues orientables 1, 2 de l'axe des roues tractrices 5, 6, le calculateur électronique 16 ordonne au distributeur hydraulique 15 d'étendre la longueur du vérin 13, ce qui a pour effet d'orienter les roues 1, 2 vers la gauche (voir figures 14 et 15; on a représenté en pointillés sur la figure 14 la position qu'occupait la remorque R au moment où l'engin tracteur T a amorcé son virage).

Ce faisant, les deux capteurs de position 22, 23, entraînés vers la gauche par la barre 12 se retrouvent dans un position où ils sont à nouveau actionnés simultanément par le coulisseau 17.

Dès que le calculateur électronique 16 reçoit les signaux correspondant à cette nouvelle situation, il ordonne au distributeur hydraulique 15 de cesser d'actionner le vérin 13, ce qui a pour effet de maintenir l'orientation des roues 1, 2 vers la gauche, et il réinitialise le cycle de comptage.

Bien entendu, l'angle de rotation de la came 19 est fonction de l'angle du virage emprunté par l'engin tracteur T, de sorte que les roues 1 et 2 peuvent tourner d'un angle plus ou moins important selon que le virage est serré ou non.

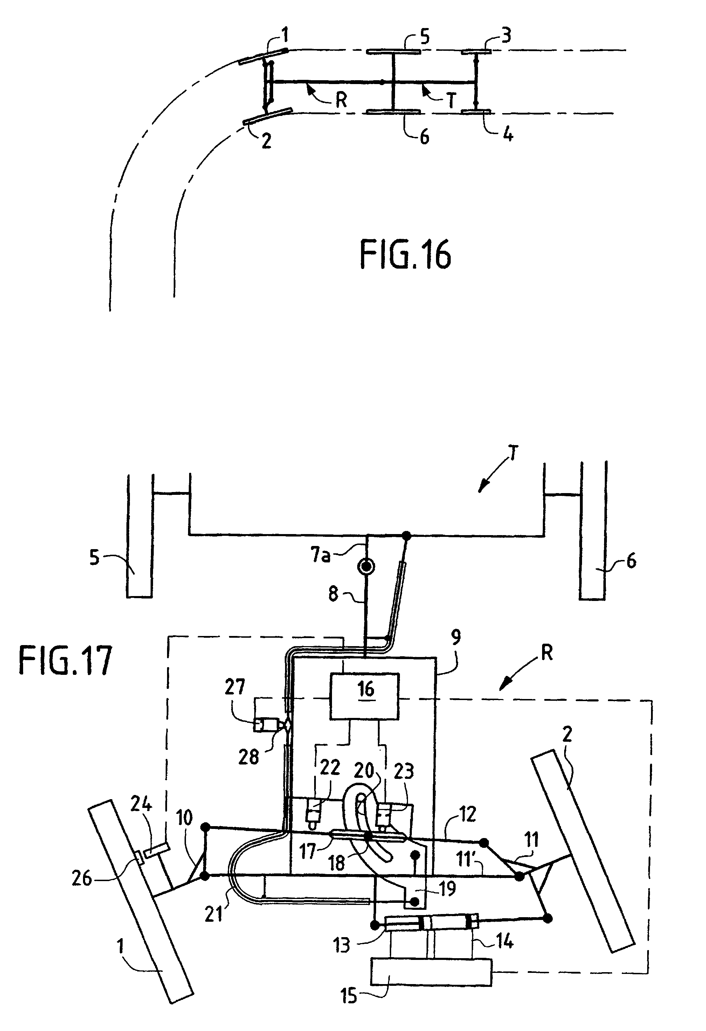

Lorsque l'engin tracteur T sort du virage (voir figure 16), le câble 21 entraîne la rotation de la came 19 dans le sens des aiguilles d'une montre jusqu'à ce qu'elle retourne en position neutre, celle-ci entraînant à son tour le coulisseau 17 jusqu'à ce qu'il se retrouve également en position neutre, c'est-à-dire dans la même position par rapport aux bords latéraux du châssis 9 que dans la situation de la figure 11a (voir figure 17).

Ce coulisseau libère de la sorte le capteur de position 22 situé à gauche de la figure, et continue d'actionner le capteur de position 23 situé à droite de la figure.

A partir du moment où le capteur de position 22 est libéré, le calculateur électronique 16 comptabilise le nombre de tours effectués par la roue 1 d'après le signal envoyé par le capteur de comptage 24.

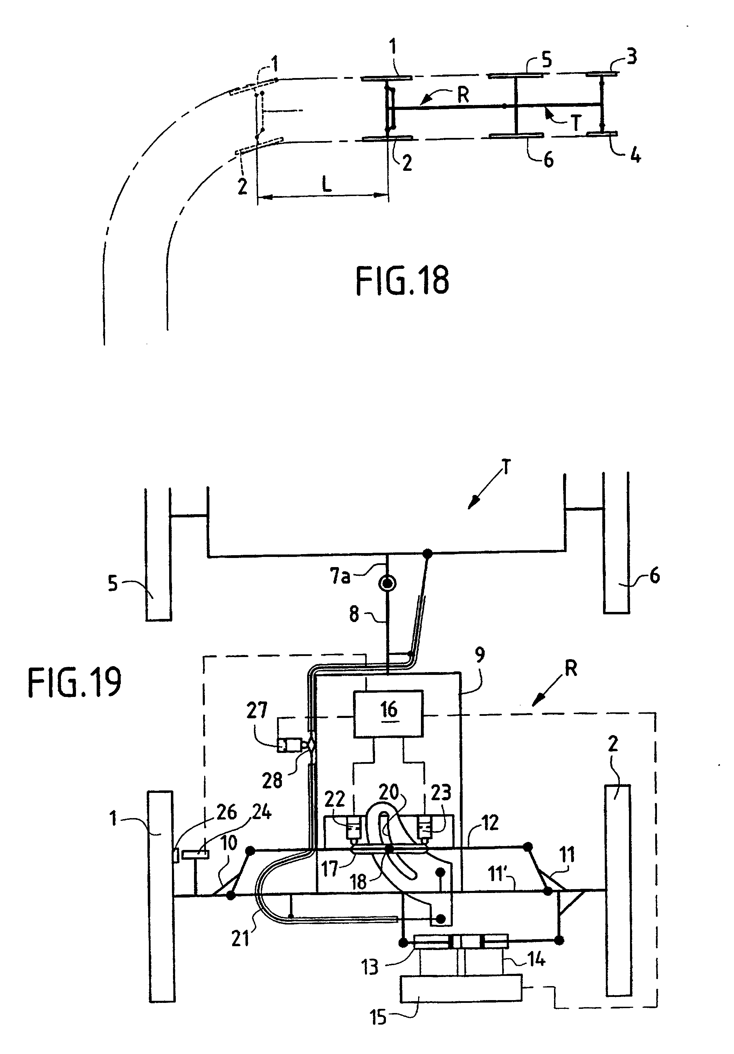

Quand ce nombre de tours atteint une valeur indiquant que la roue 1 a sensiblement atteint la position qu'occupaient les roues tractrices 5, 6 lorsque l'engin T a quitté le virage, le calculateur électronique 16 ordonne au distributeur hydraulique 15 de réduire la longueur du vérin 13, ce qui a pour effet de ramener les roues 1, 2 dans l'axe de la remorque (voir figures 18 et 19; on a représenté en pointillés sur la figure 18 la position qu'occupait la remorque R au moment où l'engin tracteur T s'est redressé pour sortir du virage).

Ce faisant, les deux capteurs de position 22, 23 entraînés vers la droite par la barre 12 se retrouvent dans une position où ils sont à nouveau actionnés simultanément par le coulisseau 17.

Dès que le calculateur électronique 16 reçoit les signaux correspondant à cette nouvelle situation, il ordonne à la centrale hydraulique 15 de cesser d'actionner le vérin 13, ce qui a pour effet de maintenir les roues 1, 2 dans l'axe de la remorque R, et il réinitialise le cycle de comptage.

Chaque fois que le capteur de remise à zéro 27 est actionné par le galet 28, c'est-à-dire chaque fois que la flèche d'attelage 8 se trouve dans l'axe de l'engin tracteur T, et à condition que les deux capteurs de position 22, 23 soient actionnés par le coulisseau 17, un signal est envoyé au calculateur électronique 16 qui ordonne au distributeur hydraulique 15 d'actionner le vérin 13 de manière à placer les roues 1, 2 dans l'axe de la remorque R (si celles-ci ne se trouvent pas déjà dans cette position).

Ce capteur permet d'éviter ainsi que les roues 1, 2 ne se mettent à tourner lorsque l'engin tracteur T effectue quelques petits écarts involontaires de part et d'autre d'une trajectoire rectiligne.

Comme on peut le comprendre à présent, la remorque R selon l'invention comprend des moyens pour interdire l'actionnement des moyens d'orientation de ses roues pendant une période de temps prédéterminée débutant au moment où l'engin tracteur commence à pivoter par rapport à cette remorque, et pour autoriser cet actionnement à la fin de cette période.

Ceci permet de maintenir l'orientation de ces roues sensiblement parallèle à celle des traces de l'engin tracteur, et ainsi d'éviter que ces roues ne sortent de ces traces comme c'est le cas dans la technique antérieure.

On obtient de la sorte une bande de passage des roues de la remorque R et l'engin tracteur T qui est aussi étroite que possible dans les virages, ce qui permet, dans le cas d'une remorque destinée à circuler dans des champs agricoles, de limiter la quantité de végétaux écrasés.

Bien entendu, la présente invention n'est pas limitée au mode de réalisation décrit et représenté, fourni à titre d'exemple illustratif et non limitatif.

C'est ainsi que l'on pourrait remplacer le système de capteur de comptage de tours de roue par tout autre système permettant de mesurer la distance parcourue par la remorque, tel qu'un système GPS™ (Global Positioning System) ou un radar.

C'est ainsi également que l'on pourrait utiliser des moyens permettant de décompter la durée qui s'écoule à partir du moment où l'engin tracteur T commence à pivoter par rapport à la remorque, et de déclencher la mise en rotation des roues de la remorque lorsque cette durée atteint une certaine valeur fonction de la vitesse à laquelle circule l'engin T.

C'est ainsi également que l'on pourrait remplacer le vérin 13 par un vérin à double effet et simple tige, ou par tout autre moyen dont on peut commander la longueur, tel qu'un mécanisme à crémaillère.

## Revendications

1. Remorque (R) destinée à être accouplée à un engin tracteur (T), telle qu'une remorque de pulvérisation agricole, comprenant
- un châssis (9) supporté par au moins deux roues orientables (1, 2),
- des moyens (13, 14, 15) pour orienter lesdites roues (1, 2) dans un sens opposé à celui du braquage dudit engin tracteur (T),
- des moyens (16, 17, 18, 19, 20, 21, 22, 23) pour commander lesdits moyens d'orientation,
**caractérisée en ce qu'**elle comprend des moyens (16, 24, 26) pour interdire l'actionnement desdits moyens d'orientation pendant une période de temps prédéterminée débutant au moment où ledit engin tracteur (T) commence à pivoter par rapport à ladite remorque (R), et pour autoriser ledit actionnement à la fin de ladite période.

2. Remorque (R) selon la revendication 1, **caractérisée en ce que** lesdits moyens d'interdiction et d'autorisation comprennent des moyens (24, 26) pour mesurer la distance parcourue par lesdites roues orientables à partir dudit moment et pour n'autoriser ledit actionnement que lorsque ladite distance a atteint une valeur prédéterminée.

3. Remorque (R) selon la revendication 2, **caractérisée en ce que** ladite valeur prédéterminée est sensiblement égale à la longueur (L) séparant l'axe desdites roues orientables (1, 2) de l'axe des roues tractrices (5, 6) dudit engin tracteur (T),

4. Remorque (R) selon l'une des revendications 2 ou 3, **caractérisée en ce que** lesdits moyens de mesure (24, 26) comprennent des moyens pour compter le nombre de tours effectués par au moins l'une desdites roues orientables, ou un système GPS™, ou un radar.

5. Remorque (R) selon la revendication 1, **caractérisée en ce que** lesdits moyens d'interdiction et d'autorisation comprennent des moyens pour décompter la durée écoulée à compter dudit moment et pour n'autoriser ledit actionnement que lorsque ladite durée a atteint une valeur prédéterminée dépendant de la vitesse à laquelle circule ledit engin tracteur (T).

6. Remorque (R) selon l'une quelconque des revendications 2 à 5, **caractérisée en ce qu'**elle comprend deux roues orientables (1, 2) montées sur des palonniers (10, 11) eux-mêmes montés pivotants sur un essieu (11') solidaire dudit châssis (9), ces deux palonniers étant reliés entre eux par une barre (12) articulée sur ceux-ci, **en ce que** lesdits moyens d'orientation des roues comprennent au moins un ensemble d'actionneur mécanique (13, 14, 15) susceptible de faire pivoter au moins l'un desdits palonniers (10, 11), **en ce que** lesdits moyens de commande (16, 17, 18, 19, 20, 21, 22, 23) comprennent:
- un coulisseau (17) monté glissant sur ladite barre (12),
- des moyens (18, 19, 20, 21) pour déplacer ledit coulisseau (17) le long de ladite barre (12) lorsque ledit engin tracteur (T) pivote par rapport à ladite remorque (R),
- des moyens (22, 23) pour détecter la position dudit coulisseau (17) par rapport à ladite barre (12), et
- un calculateur électronique (16) relié électriquement audit ensemble d'actionneur mécanique (13, 14, 15), auxdits moyens de détection (22, 23) et auxdits moyens de mesure (24, 26).

7. Remorque (R) selon la revendication 6, **caractérisée en ce que** lesdits moyens (18, 19, 20, 21) pour déplacer ledit coulisseau (17) comprennent une came (19) montée pivotante sur ledit châssis (9), cette came étant munie d'une rainure (20) coopérant avec un pion (18) situé sur ledit coulisseau (17), un câble (21) fixé à cette came (19) étant destiné à la relier audit engin tracteur (T) de manière à la faire pivoter lorsque cet engin tracteur (T) pivote par rapport à ladite remorque (R).

8. Remorque (R) selon l'une des revendications 6 ou 7, **caractérisée en ce que** lesdits moyens de détection comprennent des capteurs de position (22, 23) tels que des micro-contacts disposés de manière à pouvoir être actionnés simultanément par ledit coulisseau (17) lorsqu'il se trouve en position neutre sur ladite barre (12), et alternativement lorsque ce coulisseau (17) glisse le long de cette barre (12) vers la gauche ou vers la droite.

9. Remorque (R) selon l'une quelconque des revendications 6 à 8, **caractérisée en ce que** ledit ensemble d'actionneur mécanique (13, 14, 15) comprend un vérin à double effet (13) à simple ou double tige connecté à un distributeur hydraulique (15), ou un mécanisme à crémaillère.

10. Remorque (R) selon l'une quelconque des revendications précédentes, **caractérisée en ce qu'**elle comprend des moyens (27, 28) pour éviter que lesdites roues orientables (1, 2) ne se mettent à tourner lorsque ledit engin tracteur (T) effectue des petits écarts involontaires de part et d'autre d'une trajectoire rectiligne.

11. Remorque (R) selon les revendications 7 et 10, **caractérisée en ce que** lesdits moyens pour éviter la rotation desdites roues comprennent un capteur de remise à zéro (27) fixé sur ledit châssis (9), relié électriquement audit calculateur électronique (16), disposé de manière à pouvoir être actionné par un galet (28) fixé par exemple sur ledit câble (21) ou sur ladite came (19) lorsque ladite remorque (R) et ledit engin tracteur (T) sont alignés.

## Patentansprüche

1. Anhänger (R), bestimmt an eine Zugmaschine (T) angekuppelt zu werden, wie einen landwirtschaftlichen Sprühanhänger, umfassend:
- ein Fahrgestell (9), getragen von mindestens zwei lenkbaren Rädern (1, 2),
- Mittel (13, 14, 15) um die Räder (1, 2) in eine Richtung umgekehrt zu derjenigen des Steuerungsausschlags der Zugmaschine (T) zu lenken,
- Mittel (16, 17, 18, 19, 20, 21, 22, 23) um die Mittel zum Lenken zu steuern,
**dadurch gekennzeichnet, daß** er Mittel (16, 24, 26) zum Verhindern der Betätigung der Mittel zum Lenken während eines vorbestimmten Zeitraums enthält, der in dem Augenblick beginnt, in dem die Zugmaschine (T) anfängt, sich in Bezug auf den Anhänger (R) zu drehen, und um diese Betätigung am Ende dieses Zeitraums zu gestatten.

2. Anhänger (R) gemäß dem Anspruch 1, **dadurch gekennzeichnet, daß** die Mittel zum Verhindern und Gestatten Mittel zum Messen (24, 26) der seit dem genannten Augenblick von den lenkbaren Rädern zurückgelegten Entfernung und dafür, die Betätigung erst dann zu gestatten, wenn diese Entfernung einen vorbestimmten Wert erreicht hat, umfassen.

3. Anhänger (R) gemäß dem Anspruch 2, **dadurch gekennzeichnet, daß** dieser vorbestimmte Wert im Wesentlichen gleich wie die Länge (L) ist, die die Achse der lenkbaren Räder (1, 2) von der Achse der Antriebsräder (5, 6) der Zugmaschine (T) trennt.

4. Anhänger (R) gemäß einem der Ansprüche 2 oder 3, **dadurch gekennzeichnet, daß** die Mittel zum Messen (24, 26) Mittel zum Zählen der von mindestens einem der lenkbaren Räder ausgeführten Umdrehungen oder ein GPS™-System oder einen Radar umfassen.

5. Anhänger (R) gemäß dem Anspruch 1, **dadurch gekennzeichnet, daß** die Mittel zum Verhindern und Gestatten Mittel umfassen zum Abzählen der seit dem genannten Augenblick verflossenen Zeitdauer und zum Gestatten der Betätigung erst dann, wenn diese Zeitdauer einen vorbestimmten Wert erreicht hat, der von der Geschwindigkeit abhängt, mit der die Zugmaschine (T) läuft.

6. Anhänger (R) gemäß einem der Ansprüche 2 bis 5, **dadurch gekennzeichnet, daß** er zwei lenkbare Räder (1, 2) enthält, die auf Tragebalken (10, 11) aufgebaut sind, die selbst drehbar auf einer mit dem Fahrgestell (9) verbundenen Achse (11') aufgebaut sind, wobei diese Tragebalken miteinander mittels einer an ihnen angelenkten Stange (12) verbunden sind, und daß die Mittel zum Lenken der Räder mindestens eine mechanische Stelleinheit (13, 14, 15) umfassen, die geeignet ist, mindestens einen der Tragebalken (10, 11) zu drehen, und daß die Mittel zum Steuern (16, 17, 18, 19, 20, 21, 22, 23) umfassen:
- einen gleitend auf der Stange (12) angebrachten Gleitschuh (17),
- Mittel (18, 19, 20, 21) zum Verschieben des Gleitschuhs (17) entlang der Stange (12), wenn die Zugmaschine (T) sich in Bezug auf den Anhänger (R) dreht,
- Mittel zum Ermitteln (22, 23) der Stellung des Gleitschuhs (17) in Bezug auf die Stange (12), und
- einen elektronischen Rechner (16), elektrisch verbunden mit der mechanischen Stelleinheit (13, 14, 15), den Mitteln zum Ermitteln (22, 23) und den Mitteln zum Messen (24, 26).

7. Anhänger (R) gemäß dem Anspruch 6, **dadurch gekennzeichnet, daß** die Mittel zum Verschieben (18, 19, 20, 21) des Gleitschuhs (17) eine drehbar auf dem Fahrgestell (9) angebrachte Steuerkurve (19) umfassen, wobei diese Steuerkurve mit einer Auskehlung (20) versehen ist, die mit einem auf dem Gleitschuh (17) untergebrachten Zapfen (18) zusammenwirkt, einen an dieser Steuerkurve (19) befestigten Seilzug (21), der dazu bestimmt ist, sie mit der Zugmaschine (T) derart zu verbinden, daß er sie sich drehen lässt, wenn diese Zugmaschine (T) sich in Bezug auf den Anhänger (R) dreht.

8. Anhänger (R) gemäß einem der Ansprüche 6 oder 7, **dadurch gekennzeichnet, daß** die Mittel zum Ermitteln Stellungsfühler (22, 23) umfassen, wie Mikrokontakte, die so angebracht sind, daß sie gleichzeitig von diesem Gleitschuh (17) betätigt werden können, wenn er sich in der Mittelstellung auf der Stange (12) befindet, und nur einer von beiden, wenn der Gleitschuh (17) entlang dieser Stange (12) nach rechts oder nach links gleitet.

9. Anhänger (R) gemäß einem der Ansprüche 6 bis 8, **dadurch gekennzeichnet, daß** die mechanische Stelleinheit (13, 14, 15) einen doppeltwirkenden Arbeitszylinder (13) mit einfachem oder doppeltem Dorn umfasst, der mit einem hydraulischen Steuerventil oder einem Zahnstangenmechanismus verbunden ist.

10. Anhänger (R) gemäß einem der vorhergehenden Ansprüche, **dadurch gekennzeichnet, daß** er Mittel (27, 28) umfasst, um zu Verhindern, daß die lenkbaren Räder (1, 2) anfangen sich zu verdrehen, wenn die Zugmaschine (T) kleine unfreiwillige Abweichungen nach der einen oder anderen Seite einer geradlinigen Bahn ausführt.

11. Anhänger (R) gemäß einem der Ansprüche 7 und 10, **dadurch gekennzeichnet, daß** die Mittel zum Verhindern der Verdrehung der Räder einen auf dem Fahrgestell (9) angebrachten Fühler zum Zurücksetzen auf die Nullstellung (27) umfassen, der elektrisch mit dem elektronischen Rechner (16) verbunden ist, so konstruiert, daß er von einer Laufrolle (28) betätigt werden kann, die beispielsweise auf dem Seilzug (21) oder der Steuerkurve (19) befestigt wird, wenn der Anhänger (R) und die Zugmaschine (T) auf einer Linie ausgerichtet sind.

## Claims

1. A trailer (R), such as an agricultural sprayer trailer, adapted to be coupled to a tractor (T), the trailer comprising:
- a chassis (9) supported by at least two wheels (1, 2) that can be steered,
- steering means (13, 14, 15) for steering said wheels (1, 2) in a direction opposite to that in which said tractor (T) turns, and
- means (16, 17, 18, 19, 20, 21, 22, 23) for controlling said steering means, and the trailer being **characterized in that** it includes prohibition and authorization means (16, 24, 26) for prohibiting actuation of said steering means during a predetermined time period starting at the moment at which said tractor (T) begins to turn relative to said trailer (R) and for authorizing said actuation at the end of said period.

2. A trailer (R) according to claim 1, **characterized in that** said prohibition and authorization means include measuring means (24, 26) for measuring the distance traveled by said wheels that can be steered from said moment and for authorizing said actuation only if said distance has reached a predetermined value.

3. A trailer (R) according to claim 2, **characterized in that** said predetermined value is substantially equal to the distance (L) between the axis of said wheels (1, 2) that can be steered and the axis of the driving wheels (5, 6) of said tractor (T).

4. A trailer (R) according to either claim 2 or claim 3, **characterized in that** said measuring means (24, 26) include means for counting the number of turns of at least one of said wheels that can be steered, or a system using the GPS system, or a radar system.

5. A trailer (R) according to claim 1, **characterized in that** said prohibition and authorization means include means for counting down the time elapsed from said moment and authorizing said actuation only if said duration has reached a predetermined value depending on the speed of said tractor (T).

6. A trailer (R) according to any of claims 2 to 5, **characterized in that** it includes two wheels (1, 2) that can be steered mounted on steering arms (10, 11) pivoted on an axle (11') fastened to said chassis (9) and interconnected by a bar (12) articulated to them, **in that** said steering means include at least one mechanical actuator system (13, 14, 15) adapted to turn at least one of said steering arms (10, 11), and **in that** said control means (16, 17, 18, 19, 20, 21, 22, 23) include:
- a slider (17) mounted to slide on said bar (12),
- means (18, 19, 20, 21) for moving said slider (17) along said bar (12) when said tractor (T) turns relative to said trailer (R),
- means (22, 23) for detecting the position of said slider (17) relative to said bar (12), and
- an electronic computer (16) electrically connected to said mechanical actuator system (13, 14, 15), to said detector means (22, 23) and to said measuring means (24, 26).

7. A trailer (R) according to claim 6, **characterized in that** said means (18, 19, 20, 21) for moving said slider (17) include a cam (19) pivoted to said chassis (9) and including a groove (20) cooperating with a peg (18) on said slider (17) and a cable (21) fixed to said cam (19) for connecting it to said tractor (T) so as to cause it to turn when said tractor (T) turns relative to said trailer (R).

8. A trailer (R) according to either claim 6 or claim 7, **characterized in that** said detector means include position sensors (22, 23) such as microswitches disposed so that they are actuated simultaneously by said slider (17) when it is in a neutral position on said bar (12) and alternately when said slider (17) slides along said bar (12) toward the left or toward the right.

9. A trailer (R) according to any of claims 6 to 8, **characterized in that** said mechanical actuator system (13, 14, 15) includes a rack and pinion mechanism or a double-acting ram (13) with a single or double piston rod connected to a hydraulic distributor (15).

10. A trailer (R) according to any preceding claim, **characterized in that** it includes means (27, 28) for preventing said wheels (1, 2) that can be steered from being steered when said tractor (T) makes small and involuntary departures to either side of a rectilinear trajectory.

11. A trailer (R) according to claims 7 and 10, **characterized in that** said means for preventing said wheels from being steered include a resetting sensor (27) fixed to said chassis (9), electrically connected to said electronic computer (16), and disposed so that it is actuated by a roller (28) fixed, for example, to said cable (21) or to said cam (19) when said trailer (R) and said tractor (T) are aligned.
